# EUROPEAN PATENT APPLICATION

(11) **EP 2 770 469 A1**
(43) Date of publication of application: **27.08.2014**
(21) Application number: 14155988.0
(22) Date of filing: 20.02.2014
(51) Int. Cl.: G06Q 20/32, G06Q 20/36, G06Q 20/38, G06Q 30/02

(54) **Method and apparatus for performing electronic transactions**

(30) Priority: 22.02.2013 KR 20130019507
(71) Applicant: Samsung Electronics Co., Ltd., Suwon-si Gyeonggi-do 443-742 (KR)
(72) Inventor: Hwang, Eui-Hyeon, 443-742 Gyeonggi-do (KR); Park, Dong-Ouk, 443-742 Gyeonggi-do (KR); Kang, Jung-Han, 443-742 Gyeonggi-do (KR)
(74) Representative: Nederlandsch Octrooibureau

(57) **Abstract**

A method for performing electronic transactions, includes receiving a primary wallet component registered in a ticket server and an additional wallet component registered to the ticket server from a first provider server, displaying the primary wallet component and the additional wallet component, if selection of the additional wallet component is detected, requesting a second provider server to issue the selected additional wallet component, receiving the additional wallet component issued by the second provider server corresponding to the requested additional wallet component, and displaying the issued additional wallet component on a screen.

## Description

### TECHNICAL FIELD

The present disclosure relates generally to a technology related to a terminal apparatus for performing electronic transactions using the electronic wallet components.

### BACKGROUND

A variety of applications are currently developed for a modem terminal apparatus. In particular, a wallet application refers to an application which may be used by a user as a form of an electronic wallet of the terminal apparatus. In the wallet application corresponding to the electronic wallet, wallet components such as coupons, tickets, and cards may be saved.

However, additional information on the coupons is not normally included in the coupon displayed in the wallet application. In other words, other services except for a method for using the coupon displayed in the wallet application are not provided.

Therefore, there is a need for developing a technology which may provide additional services for the wallet component such as the coupons displayed in the wallet application.

### SUMMARY

To address the above-discussed deficiencies of the prior art, it is a primary object to provide a terminal apparatus and a control method thereof in which only detailed information of a wallet component corresponding to variable information is changed to be registered with a ticket server so that various wallet components may be registered with the ticket server in a simple way.

Another aspect of the present disclosure is to provide a terminal apparatus and a control method thereof in which only detailed information of additional wallet components corresponding to variable information is changed to be registered with a ticket server so that various additional wallet components may be registered with the ticket server in a simple way.

Another aspect of the present disclosure is to provide a terminal apparatus and a control method thereof in which a primary wallet component along with an additional wallet component are provided to a user of the terminal apparatus, thereby increasing an advertising effect of a provider of the additional wallet component. A primary wallet component can be a piece of digital information representing for example a ticket, a coupon, or a card. The information may include barcode information which can be shown on a display of the terminal apparatus as a barcode. The digital information can serve to gain admittance, e.g. to board a plane or to enter a location. An additional wallet component can also have the above mentioned features.

Another aspect of the present disclosure is to provide a terminal apparatus and a control method thereof in which, if a plurality of the additional wallet components are arranged and displayed in a row in the bottom of the (touch) screen, a plurality of additional wallet components may be scrolled by a drag or flick on the additional wallet component displayed among a plurality of additional wallet components.

Another aspect of the present disclosure is to provide a terminal apparatus and a control method thereof in which, if selection of an additional wallet component in a partner relationship with a wallet component is detected, a second provider server is requested to issue the additional wallet component so that the additional wallet component is issued. Further, one embodiment of the present disclosure is advantageous in that the additional wallet component may be sequentially displayed on a touch screen so that the additional wallet component may be sequentially issued.

Another aspect of the present disclosure is to provide a terminal apparatus and a control method thereof in which, if an application corresponding to an issued additional wallet component is not installed, installation of the application is induced to use the additional wallet component and a wallet application is executed to use the additional wallet component.

In accordance with another aspect of the present disclosure, a method of controlling a terminal apparatus for transmitting partnership information of a wallet component is provided. The method includes receiving a primary wallet component registered in a ticket server and an additional wallet component registered to the ticket server from a first provider server, storing the primary wallet component and the additional wallet component, displaying the primary wallet component and the additional wallet component on a touch screen; detecting selection of the additional wallet component, if selection of the additional wallet component is detected, requesting a second provider server to issue the selected additional wallet component, receiving the additional wallet component issued by the second provider server corresponding to the requested additional wallet component; and displaying the issued additional wallet component on the touch screen.

In accordance with another aspect of the present disclosure, a terminal apparatus for transmitting partnership information of a primary wallet component is provided. The terminal apparatus includes a controller which receives a primary wallet component registered in a ticket server and an additional wallet component registered to the ticket server from a first provider server, stores the primary wallet component and the additional wallet component, displays the wallet component and the additional wallet component on a touch screen, detects selection of the additional wallet component, if selection of the additional wallet component is detected, requests a second provider server to issue the selected additional wallet component, receives the additional wallet component issued by the second provider server corresponding to the requested additional wallet component, and displays the issued additional wallet component on the touch screen; a touch screen which displays the primary wallet component and the additional wallet component and displays the issued additional wallet component; and a storage unit which stores the primary wallet component and the additional wallet component.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a schematic block diagram illustrating a terminal apparatus according to one embodiment of the present disclosure;
FIG. 2 is a front perspective view of a front surface of a terminal apparatus according to one embodiment of the present disclosure;
FIG. 3 is a rear perspective view of a rear of a terminal apparatus according to one embodiment of the present disclosure;
FIG. 4 is a diagram illustrating a configuration of a server according to one embodiment of the present disclosure;
FIG. 5 is a flow chart illustrating a method of controlling a terminal apparatus which transmits partnership information of a primary wallet component according to one embodiment of the present disclosure;
FIG. 6 illustrates a primary wallet component and an additional wallet component;
FIG. 7 illustrates an additional wallet component displayed on a touch screen being scrolled;
FIG. 8 illustrates issuance of an additional wallet component according to one embodiment of the present disclosure;
FIG. 9 illustrates a conversion of a screen displaying an issued additional wallet component into a screen displaying a wallet component;
FIG. 10 is a flowchart illustrating a control method of a terminal apparatus for transmitting partnership information of the wallet component according to another embodiment of the present disclosure; and
FIG. 11 is illustrates a screen for executing of an application corresponding to an issued additional wallet component according to another embodiment of the present disclosure.

### DETAILED DESCRIPTION

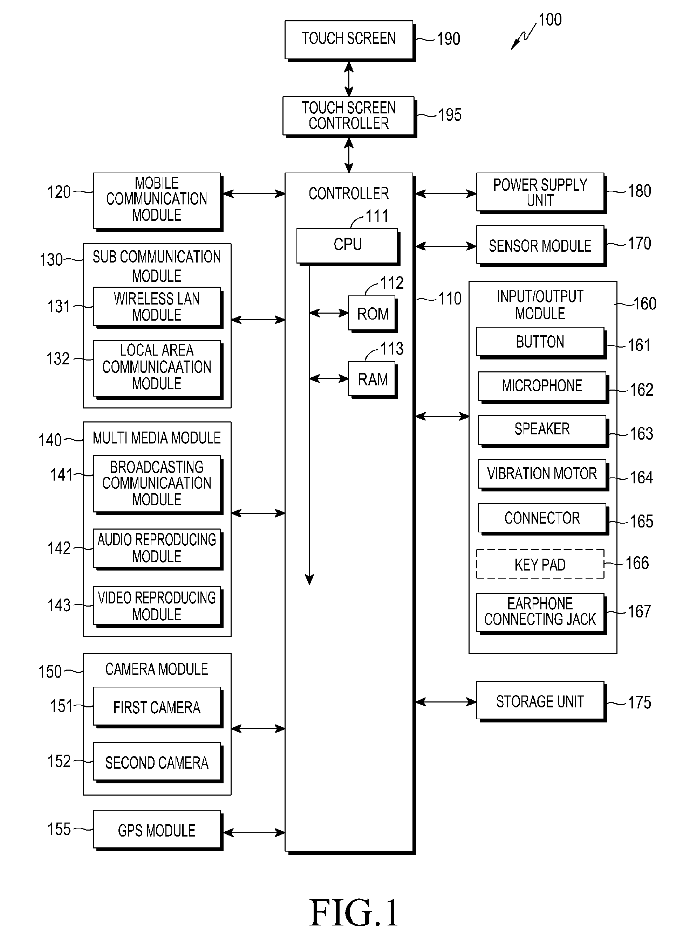

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. While various modifications and example embodiments can be made, only particular example embodiments will be described more fully herein with reference to the accompanying drawings. However, the present disclosure should not be construed as limited to only the example embodiments set forth herein but rather should be understood to cover all modifications, equivalents or alternatives falling within the scope and technical terms of the disclosure.

It will be understood that, although the terms first, second, etc. may be used herein to describe various elements, these elements should not be limited by these terms. These terms are only used to distinguish one element from another. For example, a first element may be referred to as a second element without departing from the scope of rights of the present disclosure, and likewise a second element may be referred to as a first element. The term "and/or" encompasses both combinations of the plurality of related items disclosed and any one item from among the plurality of related items disclosed.

The terminology used herein is for the purpose of describing particular embodiments only and is not intended to be limiting of example embodiments of the disclosure. As used herein, the singular forms are intended to include the plural forms as well, unless the context clearly indicates otherwise. It will be understood that the terms "comprises," or "includes," when used herein, specify the presence of stated features, integers, steps, operations, elements, components or any combinations thereof, but do not preclude the presence or addition of one or more other features, integers, steps, operations, elements, components, or any combinations thereof.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present application.

FIG. 1 is a schematic block diagram illustrating a terminal apparatus according to one embodiment of the present disclosure.

Referring to FIG. 1, an apparatus 100 can be connected to an external apparatus (not shown) using an external apparatus connection unit such as a sub communication module 130, a connector 165, and an earphone connection jack 167. The external apparatus can include various apparatuses such as earphones, an external speaker, a universal serial bus (USB), a memory, a charger, a cradle, a docking station, a DMB antenna, a mobile payment related apparatus, a health care apparatus (e.g., a blood glucose tester), a game, a vehicle navigation apparatus, which can be attached to and wire connected to the apparatus 100. Also, the external apparatus can include a short range communication apparatus such as a Bluetooth communication apparatus and a near field communication (NFC) apparatus, a WiFi direct communication apparatus, and a wireless access point (AP). Further, the external apparatus can include other apparatus, such as a portable terminal, a smart phone, a tablet PC, a desktop PC, and a server.

Referring to FIG. 1, the apparatus 100 includes a display unit 190 and a display controller 195. In addition, the apparatus 100 includes a controller 110, a mobile communication module 120, the sub communication module 130, a multimedia module 140, a camera module 150, a GPS module 155, an input/output module 160, a sensor module 170, a storage unit 175, and a power supply unit 180. The sub communication module 130 includes at least one of a wireless LAN module 131 and a short range communication module 132, and the multimedia module 140 includes at least one of a broadcasting communication module 141, an audio reproduction module 142, and a video reproduction module 143. The camera module 150 includes at least one of a first camera 151 and a second camera 152, and the input/output module 160 includes at least one of a button 161, a microphone 162, a speaker 163, a vibration motor 164, the connector 165, a keypad 166, and the earphone connection jack 167. Hereinafter, an example in which the display unit 190 and the display controller 195 are a touch screen and a touch screen controller, respectively, will be described.

The controller 110 can include a CPU 111, a ROM 112 storing a control program for controlling the apparatus 100, and a RAM 113 which remembers a signal or a data input from an outside of the apparatus 100 or is used as a memory space for a task performed by the apparatus 100. The CPU 111 can include a single core, a dual core, a triple core, or a quad core. The CUP 111, the ROM 112, and the RAM 113 can be interconnected with each other through an internal bus.

The controller 110 can control the mobile communication module 120, the sub communication module 130, the multimedia module 140, the camera module 150, the GPS module 155, the input/output module 160, the sensor module 170, the storage unit 175, the power supply unit 180, the touch screen 190, and the touch screen controller 195.

The mobile communication module 120 enables the apparatus 100 to be connected to the external apparatus through a mobile communication by using at least one or a plurality of antennas (not shown) according to the control of the controller 110. The mobile communication module 120 transmits/receives a wireless signal for a voice phone, a video call, a text message (SMS) or a multimedia message(MMS) with a portable phone (not shown) having a telephone number which is input to the apparatus 100, a smart phone (not shown), a tablet PC or other devices (not shown).

The sub communication module 130 can include at least one of the wireless LAN module 131 and the short range communication module 132. For example, it can include either the wireless LAN module 131 or the short range communication module 132, or can include both the wireless LAN module 131 and the short range communication module 132.

The wireless LAN module 131 can be connected to internet where the wireless access point (AP) (not shown) is installed according to the control of the controller 110. The wireless LAN module 131 supports a wireless LAN standard (IEEE802.11x) of the American Institute of Electrical and Electronics Engineers (IEEE).

The short range communication module 132 can perform a wireless short range communication between the apparatus 100 and an image forming apparatus (not shown) according to the control of the controller 110.

A short range communication method can include a Bluetooth, an infrared communication (IrDA), a WiFi-direct communication, and a near field communication (NFC), etc.

The apparatus100 can include at least one of the mobile communication module 120, the wireless LAN module 131, and the short range communication module 132 depending on a performance thereof. For example, the apparatus 100 can include the mobile communication module 120, the wireless LAN module 131, the short range communication module 132, and/or a combination thereof, depending on a performance thereof.

The multimedia module 140 can include the broadcasting communication module 141, the audio reproducing module 142, or the video reproducing module 143. The broadcasting communication module 141 can receive a broadcasting signal (for example, a TV broadcasting signal, a radio broadcasting signal, or a data broadcasting signal) and an additional broadcasting information (for example, Electric Program Guide (EPG) or an Electric Service Guide (ESG)) emitted from a broadcasting station through a broadcasting antenna (not shown) according to the control of the controller 110. The audio reproduction module 142 can reproduce a digital audio file (for example, a file having a file extension of mp3, wma, ogg, or wav) which is saved or received according to the control of the controller 110. The video reproduction module 143 can reproduce a digital video file (for example, a file having a file extension of mpeg, mpg, mp4, avi, mov, or mkv) which is saved or received according to the control of the controller 110. The video reproduction module 143 can reproduce the digital audio file.

The multimedia module 140 can include the audio reproduction module 142 and the video reproduction module 143, except for the broadcasting communication module 141. In addition, the audio reproduction module 142 or the video reproduction module 143 of the multimedia module 140 can be included in the controller 110.

The camera module 150 can include at least one of the first camera 151 and the second camera 152 that photographs a still image or a video according to the control of the controller 110. In addition, the first camera 151 or the second camera 152 can include a secondary light source (for example, a flash (not shown)) which provides a required intensity of radiation for photographing. The first camera 151 can be placed in a front side of the apparatus 100, and the second camera 152 can be placed in a rear side of the apparatus 100. Alternatively, the first camera 151 and the second camera 152 can be placed adjacent to each other (for example, an interval between the first camera 151 and the second camera 152 is greater than 1cm and smaller than 8cm) so that a 3 dimensional still image or a 3 dimensional video can be photographed.

The GPS module 155 can receive a radio wave from a plurality of GPS satellites (not shown) which are located on an orbit of the earth and calculate a location of the apparatus 100 by using a time of arrival of the radio wave at the apparatus 100 from a GPS satellite (not shown).

The input/output module 160 can include at least one of a plurality of buttons 161, the speaker 163, the vibration motor 164, the connector 165, and the keypad 166.

The button 161 can be formed on a front surface, a side surface, or a rear surface of a housing of the apparatus 100, and can include at least one of a power/lock button, a volume button, a menu button, a home button, a back button, and a search button.

The microphone 162 generates an electrical signal by receiving a voice or a sound according to the control of the controller 110.

The speaker 163 can output a sound corresponding to various signals (for example, a wireless signal, a broadcasting signal, a digital audio file, a digital video file, or photo shooting, etc.) of the mobile communication module 120, the sub communication module 130, the multimedia module 140 or the camera module 150 to be output to the external of the apparatus 100 according to the control of the controller 110. The speaker 163 can output the sound (for example, a button operation tone corresponding to placing a telephone call or a ring tone) corresponding to a function performed by the apparatus 100. The speaker 163, singular or plural, can be formed at an appropriate location or locations of the housing of the apparatus 100.

The vibration motor 164 can convert the electrical signal to a mechanical vibration according to the control of the controller 110. For example, when the apparatus 100 in a vibration mode receives a voice call from another apparatus (not shown), the vibration motor 164 is operated. The vibration motor 164 can be formed to be singular or plural in the housing of the apparatus 100. The vibration motor 164 can operate in response a user's touch gesture that touches the touch screen 190 and a continuous movement of touching the touch screen 190.

The connector 165 can be used as an interface for connecting the apparatus 100 and an external apparatus (not shown) or a power supply source (not shown). The apparatus 100 can transmit data saved in the storage unit 175 of the apparatus 100 to the external apparatus (not shown) or can receive data from the external apparatus (not shown) through a wired cable connected to the connector 165, according to the control of the controller 110.

Here, the external apparatus can be a docking station, and the data can be an input signal transmitted from an external input device, for example, a mouse or a keyboard. In addition, the apparatus 100 can receive power from the power supply source (not shown) through the wired cable connected to the connector 165 or can charge a battery (not shown) by using the power supply source.

The keypad 166 can receive a key input from the user to control the apparatus 100. The keypad includes a physical keypad (not shown) formed on the apparatus 100 or a cyber keypad (not shown) displayed on the touch screen 190. The physical keypad (not shown) formed on the apparatus 100 can be excluded depending on a performance or a structure of the apparatus 100.

Earphones (not shown) can be connected to the earphone connection jack 167 to be connected to the apparatus 100.

The sensor module 170 includes at least one of sensor that detects a condition of the apparatus 100. For example, the sensor module 170 can include a proximity sensor which detects accessibility of the user to the apparatus 100 and a luminance sensor which detects an amount of the light around the apparatus 100. In addition, the sensor module 170 can include a gyro sensor. The gyro sensor can detect an operation of the apparatus 100 (for example, a rotation of the apparatus 100, an acceleration or a vibration applied to the apparatus 100), detect a point of the compass, and detect a direction of a gravity by using the Earth's magnetic field. In addition, the sensor module 170 can include an altimeter which detects an altitude by measuring an atmospheric pressure. At least one of the sensors detects the condition and generates a signal corresponding to the detection to be transmitted to the controller 110. At least one of the sensors of the sensor module 170 can be added or be deleted depending on the performance of the apparatus 100.

The storage unit 175 can save a signal or data input or output corresponding to the operation of the mobile communication module 120, the sub communication module 130, the multimedia module 140, the camera module 150, the GPS module 155, the input/output module 160, the sensor module 170, and the touch screen 190 according to the control of the controller 110. The storage unit 175 can save a control program and applications for controlling the apparatus 100 or the controller 110.

The term "storage unit" includes the storage unit 175, the ROM 112 or the RAM 113 within the controller 110, or a memory card (not shown) (for example, an SD card or a memory stick) mounted on the apparatus 100. The storage unit can include a non-volatile memory, a volatile memory, a hard disk drive (HDD), or a solid state drive (SSD).

The power supply unit 180 can supply power to a single or a plurality of batteries (not shown) which are placed on the housing of the apparatus according to the control of the controller 110. A single or a plurality of batteries supplies power to the apparatus 100. In addition, the power supply unit 180 can supply power input from the external power supply source (not shown) to the apparatus 100 through the wired cable connected to the connector 165. In addition, the power supply unit 180 can supply wirelessly power input from the external power supply source to the apparatus through a wireless charging technology.

The touch screen 190 can provide a user interface corresponding to various services (for example, a phone call, data transmission, broadcasting, and photo shooting) to the user. The touch screen 190 can transmit an analog signal corresponding to at least one touch input to the user interface to the controller 195. The touch screen 190 can receive at least one touch through the user's body (for example, a finger including the thumb) or a touchable input tool (for example, a stylus pen). In addition, the touch screen can receive a continuous movement of a touch among at least one touch.

The touch screen 190 can transmit an analog signal corresponding to the continuous movement of an input touch to the touch screen controller 195.

In the present disclosure, the touch is not limited to contact between the touch screen 190 and the user's body or the touchable input tool and can include contact free input.

A detectable interval in the touch screen 190 can be changed according to the performance or the structure of the apparatus100.

The touch screen 190 can be implemented, for example, in a resistive method, a capacitive method, an infrared method, or an acoustic wave method.

The touch screen controller 195 converts the analog signal received from the touch screen 190 to a digital signal (for example, X and Y coordinates) to be transmitted to the controller 110. The controller 110 can control the touch screen 190 by using the digital signal received from the touch screen controller 195. For example, the control unit 110 can cause a shortcut icon (not shown) displayed on the touch screen 190 to be selected or execute the shortcut icon (not shown) in response to a touch. In addition, the touch screen controller 195 can be included in the controller 110.

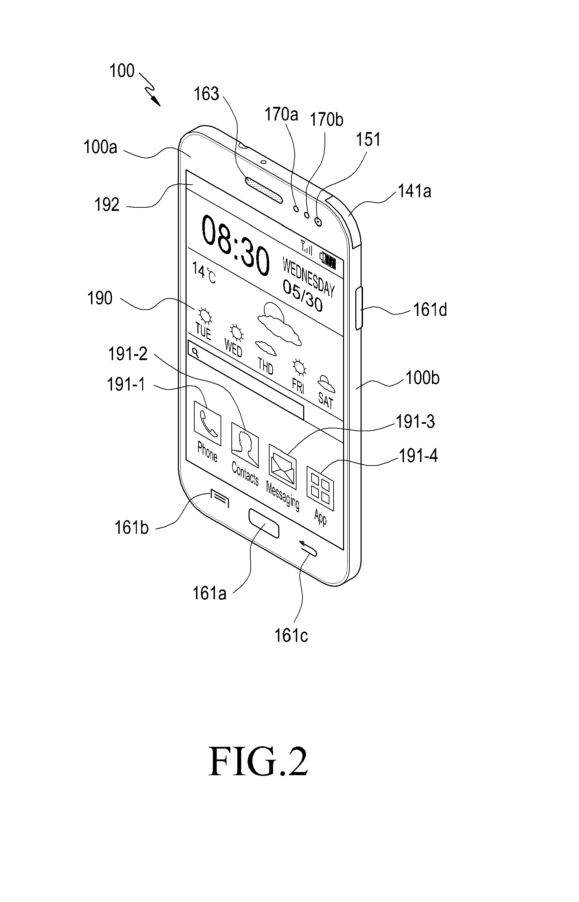

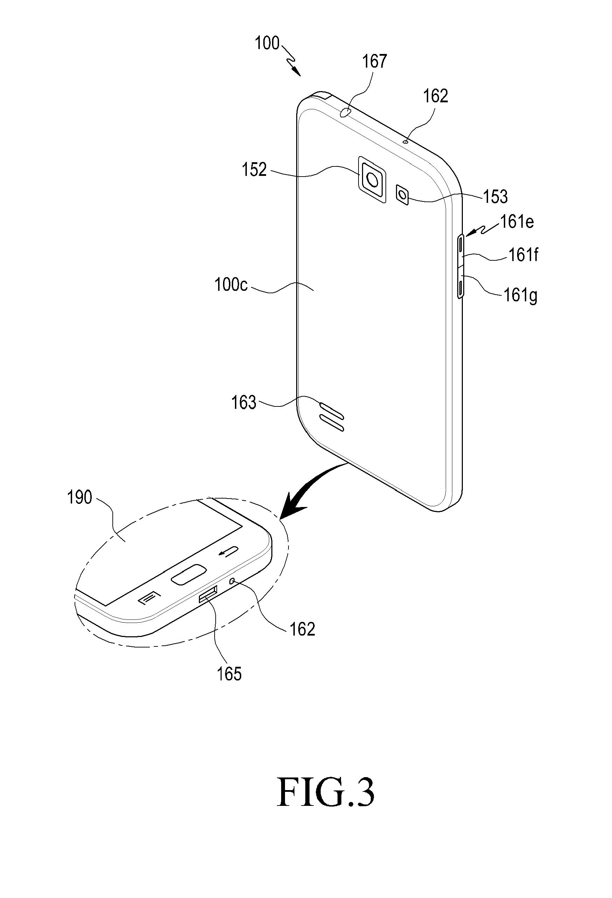

FIG. 2 is a front perspective view of a terminal apparatus according to one embodiment of the present disclosure. FIG. 3 is a rear perspective view of a terminal apparatus according to one embodiment of the present disclosure.

Referring to FIG. 2, the touch screen 190 is placed on a center, front surface 100a of the apparatus 100. The touch screen 190 is formed to be occupied most of the front surface 100a of the apparatus 100. In FIG 2, the touch screen 190 shows an example of a main home screen displayed on the touch screen 190. The main home screen is a first screen displayed on the touch screen 190 when a power of the apparatus 100 is turned on. In addition, when the apparatus100 has home screens of different pages, the main home screen can be a predetermined home screen(e.g., first home screen) among various pages of the home screen. In the home screen, shortcut icons 191-1, 191-2, 191-3 for executing frequently used applications, an application switch key 191-4, a time, weather, etc. can be displayed. The application switch key 191-4 displays application icons for representing applications on a screen of the touch screen 190. In addition, a status bar 192 which displays the status of the apparatus 100 such as a battery charging state, an intensity of a received signal, and a current time can be displayed on an upper part of the touch screen 190.

A home button 161a, a menu button 161b, and a back button 161 can be formed on a lower part of the touch screen 190.

The home button 161a displays the main home screen on the touch screen 190.

For example, when the home button 161a is pressed while any home screen other than the main home screen or the menu screen is displayed on the touch screen 190, the main home screen can be displayed on the touch screen 190. In addition, when the home button 161a is pressed (or touched) while applications are being executed, the main home screen illustrated in FIG. 2 can be displayed on the touch screen 190. Further, the home button 161a can be used for displaying recently used applications or displaying a task manager on the touch screen 190.

The menu button 161b provides a usable connection menu on the touch screen 190. The connection menu can include a widget adding menu, a background screen change menu, a search menu, an editing menu, and a configuration setting menu. Also, when executing an application, a connection menu connected to the application can be provided.

The back button 161 can display a screen executed immediately before a currently executed screen or can terminate a most recently used application.

The first camera 151, the luminance sensor 170a, and the proximity sensor 170b can be placed on an edge area of the apparatus 100. The second camera 152, the flash 153, and the speaker 163 can be placed on the rear surface 100c of the apparatus 100.

For example, a power/reset button 161d, a volume control button 161e, a terrestrial DMB antenna 141 a for receiving a broadcasting signal, a single or a plurality of microphones 162 can be placed on a side portion 100b of the apparatus 100. The DMB antenna 141a can be formed to be fixed to or removable from the apparatus 100.

In addition, the connector 165 is formed on a lower side portion of the apparatus 100. A plurality of electrodes are formed in the connector 165 and can be wire connected to the external apparatus. The ear phone connection jack 167 is formed on an upper side portion of the apparatus 100. The earphone can be inserted to the earphone connection jack 167.

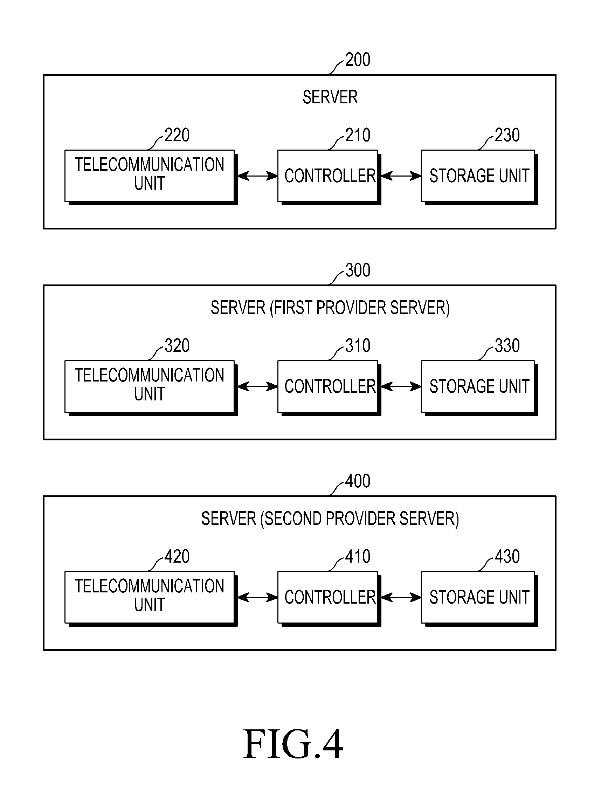

FIG. 4 is a diagram illustrating a configuration of a server according to one embodiment of the present disclosure. A representative configuration of the servers 200, 300, 400 relates to an electronic wallet application and the representative configuration of the servers 200, 300, 400 is schematic and a part of elements shown in the representative configuration of the terminal apparatus 100 can be added if needed.

Referring to FIG. 4, a ticket server 200 can include a controller 210, a communication unit 220, and a storage unit 230. The controller 210 receives an electronic primary wallet component from a first provider server and receives an electronic additional wallet component from a second provider server. Also, the controller 210 transmits the primary wallet component and the additional wallet component to the terminal apparatus 100. The communication unit 220 performs a communication with the first provider server and the second provider server. The storage unit 230 saves the primary wallet component and the addition component.

The first provider server 300 can include a controller 310, a communication unit 320, and a storage unit 330. The controller 310 transmits a primary wallet component to the ticket server 200. The communication unit 320 performs a communication with the terminal apparatus, the ticket server, and the second provider server. The storage unit 330 saves the primary wallet component.

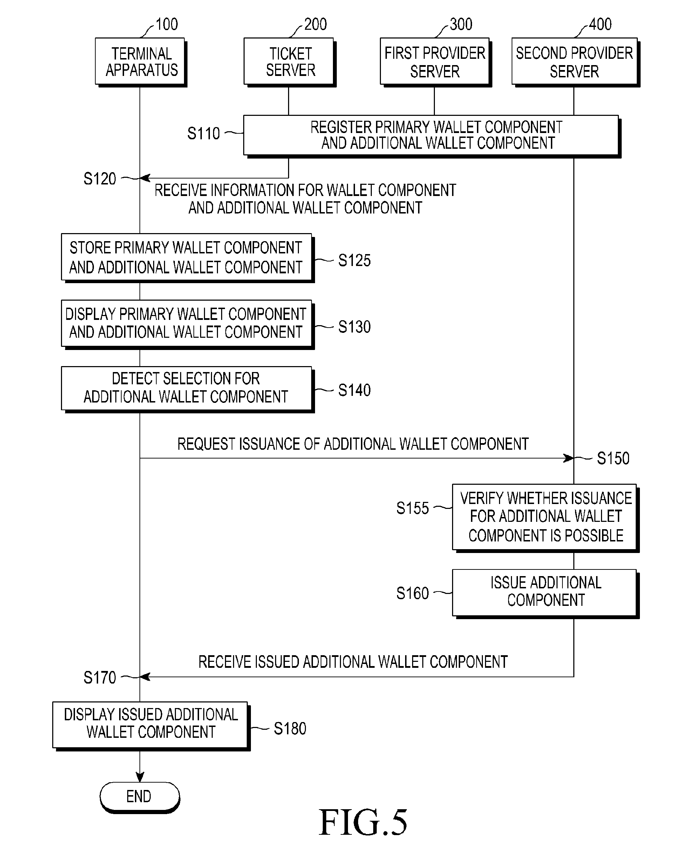

The second provider server 400 can include the controller 410, the communication unit 420, and the storage unit 430. The controller 410 transmits the additional wallet component to the ticket server 200. Also, the controller 410 receives an issuance request for a selected additional wallet component from the terminal apparatus 100, issues the additional wallet component, and transmits the issued additional wallet component. The communication unit 420 performs a communication with the terminal apparatus, the ticket server, and the first provider server. The storage unit 430 saves the additional wallet component. FIG. 5 is a flow chart illustrating a method of controlling a terminal apparatus which transmits partnership information of a wallet component according to one embodiment of the present disclosure.

Referring to FIG. 5, first, the primary wallet component is registered with the ticket server by the first provider server, and the additional wallet component is registered with the ticket server by the second provider server (S110).

The primary wallet component can be registered with the ticket server 200 from the first provider server 300. In other words, the primary wallet component saved in the first provider server can be transmitted to the ticket server 200 and can be saved in the storage unit 230 of the ticket server 200. Here, the controller 310 of the first provider server 300 can transmit the wallet component to the ticket server 200. Therefore, the registration with the ticket server 200 can indicate that the primary wallet component transmitted from the first provider server 300 was saved in the storage unit 230 of the ticket server 200. The transmission of the primary wallet component from the first provider server 300 to the ticket server 200 can be performed by using the communication unit 310 of the first provider server 300 and the communication unit 210 of the ticket server 200.

Also, the ticket server 200 is a separate server which is different from the first provider server 300. In other words, the first user (i.e., the first provider) of the first provider server 300 can register its wallet component with the separate server 300 which is different from its server 200. Also, an administrator of the ticket server 200 can manage a plurality of registered wallet components from a plurality of provider servers.

Here, the wallet component can be at least one of a coupon, a ticket, and a card. The coupon can be a discount coupon which can be used at a store. For example, the coupon can be a discount coupon of a certain amount which can be used in a grocery store when purchasing shampoo. Also, the ticket can be used for an admission to a place of intended use. For example, the ticket can be an boarding ticket for an airplane or a ticket for admission to a theater. Also, the card can be a membership card or a credit card. For example, the card can be a membership card which can be used at the grocery store.

Therefore, the primary wallet component can be registered to the ticket server 200 from the first provider server 300. Here, the primary wallet component can be the coupon, the ticket, or the card. Therefore, the wallet component such as the coupon, the ticket or the card can be registered with the ticket server 200. For example, the airplane ticket can be registered with the ticket server 200 from the first provider server 300. In other words, the airplane ticket saved in the first provider server 300 can be saved and registered with the storage unit 230 of the ticket server 200. For example, the first provider such as a K airline can register the airplane ticket saved in its provider server 300 to the ticket server 300. Also, an administrator of the ticket server 200 can save and manage the airplane ticket which was received from the first provider server 300 of the K Airline. Therefore, the ticket server 200 can receive, register, and then manage the wallet component such as the coupon, the ticket, or the card from a plurality of providers. Further, the first user (the first provider) of the first provider server 300 can use the service provided from the ticket server 200 by registering the wallet component (ticket) such as its coupon, ticket, or card to the ticket server 200.

In addition, the wallet component includes common information and variable information received from the first provider server 300. The common information refers to fixed information among information which forms the wallet component. In other words, the common information refers to information fixed and common among a plurality of wallet components. On the contrary, the variable information refers to modifiable information among the information which forms the wallet component. In other words, the variable information refers to information which is modifiable and thus is not common among a plurality of wallet components. For example, the common information can be a display layout of the wallet component, and the variable information can be detailed information of the wallet component. In other words, the display layout of the wallet component corresponding to the common information can be common information fixed and common among a plurality of wallet components. On the contrary, the detailed information of the wallet component corresponding to the variable information can be modifiable information among information which forms the wallet component.

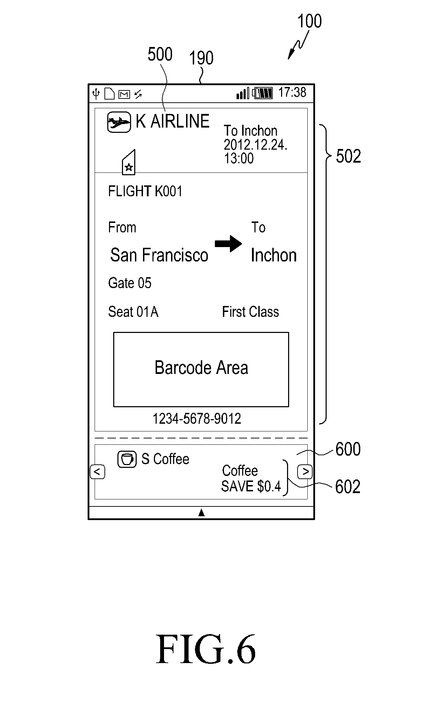

FIG. 6 is illustrates a primary wallet component and an additional wallet component. Referring to FIG. 6, an example in which the primary wallet component is a ticket is illustrated. In other words, the primary wallet component of FIG. 6 corresponds to an airplane ticket. A provider's image logo, a provider's company name 500, detailed information 502 about the ticket, a barcode corresponding to the ticket, and a barcode number can be included in the primary wallet component which corresponds to the airplane ticket.

For example, as shown in FIG. 6, the provider's image logo such as an airplane image, the provider's company name 500 such as 'K AIRLINE', and detailed information of the ticket 502 such as K001 corresponding to a flight number, a departure point corresponding to San Francisco, a destination corresponding to Inchon, a gate number, a seat number, and a seating class, a barcode corresponding to the ticket, and the barcode number such as the barcode '1234-5678-9012' corresponding to the ticket can be included in the wallet component.

Here, the wallet component illustrated in FIG. 6 can include common information and variable information received from the first provider server 300. In addition, the common information is the display layout of the wallet component, and the variable information can be the detailed information of the wallet component. Therefore, the display layout with the provider's image logo and the provider's company name 500 are displayed on an upper part of the screen, and the detailed information 502 of the ticket displayed in the center, and the barcode and the barcode number corresponding to the ticket are displayed on a lower part of the screen can be the common information. Thus, the display layout of the wallet component corresponding to the common information can be the common information which is fixed between a plurality of wallet components and is not subject to change.

On the contrary, the variable information can be the detailed information of the primary wallet component which includes K001 corresponding to the flight number, the departure point corresponding to San Francisco, the destination corresponding to Inchon, and the detailed ticket information such as the gate number, the seat number, the seating class, and the barcode number such as the barcode, '1234-5678-9012' corresponding to the ticket. Here, the detailed information of the wallet component corresponding to the variable information can be the modifiable information among the information which forms the wallet component.

Therefore, the first user of the first provider server 300 may not change the display layout of the wallet component corresponding to the common information and the variable information can change only the detailed information of the wallet component. In other words, the first user of the first provider 300 may not change the display layout of the wallet component corresponding to the common information with respect to a plurality of wallet components and can change the only detailed information of the primary wallet component corresponding to the variable information to be registered to the ticket server 200.

Therefore, an embodiment of the present disclosure is advantageous in that various wallet components can be registered to the ticket server in a simple manner by modifying only the detailed information of the primary wallet component, corresponding to the variable information, to be registered to the ticket server 200.

The additional wallet component can be registered to the ticket server 200 from the second provider server 400. In other words, the additional wallet component saved in the second provider server 400 can be transmitted from/to the ticket server 200 and saved in the storage unit 230 of the ticket server 200. Here, the controller 410 of the second provider server 400 can transmit the additional wallet component to the ticket server 200. Therefore, the registration to the ticket server 200 can indicate that the additional wallet component transmitted from the second provider server 400 is saved in the storage unit 230 of the ticket server 200. The transmission to the ticket server 200 from the second provider of the additional wallet component can be performed by using the communication unit 410 of the second provider server 400 and the communication unit 210 of the ticket server 200.

Also, the ticket server 200 is a separate server which is different from the second provider server 400. In other words, the second user (i.e., the second provider) of the second provider server 400 can register its additional wallet component to the separate server 200 which is different from its server 400. Also, an administrator of the ticket server 200 can manage a plurality of registered additional wallet components from a plurality of provider servers.

Here, the additional wallet component can be, for example, at least one of the coupon, the ticket, and the card, which is in associated with the primary wallet component. The coupon can be the discount coupon which can be used at a grocery store. For example, the coupon can be a discount coupon of a certain amount which can be used in the grocery store when purchasing the shampoo. Also, the ticket can be used for an admission to a place of intended use. For example, the ticket can be the airplane boarding ticket or the ticket for admission to the theater. Also, the card can also be the membership card or the credit card. For example, the card can be the membership card which can be used at the grocery store.

Therefore, the additional wallet component can be registered to the ticket server 200 from the second provider server 400. Here, the additional wallet component can be at least one of the coupon, the ticket, and the card. Therefore, the additional wallet component such as the coupon, the ticket, or the card can be registered to the ticket server 200. For example, the airplane ticket can be registered to the ticket server 200 from the second provider server 400. In other words, the airplane ticket saved in the second provider server 400 can be saved and registered with the storage unit 230 of the ticket server 200. For example, the second provider such as S Coffee can register a coffee coupon saved in its provider server 400 to the ticket server 200. Also, the administrator of the ticket server 200 can store and manage the coffee coupon received from the second provider server 400 of the S Coffee. Therefore, the ticket server 200 can manage and register the received additional wallet component such as at least one of the coupon, the ticket, and the card from a plurality of provider servers. In addition, the second user (the second provider) of the second provider server 400 can use the service provided from the ticket server 200 by registering the additional wallet component (ticket) such as its coupon, ticket, or card to the ticket server 200.

Also, the additional wallet component includes the common information and the variable information received from the second provider server 400. The common information refers to fixed information among the information which forms the additional wallet component. In other words, the common information refers to information fixed and common among a plurality of additional wallet components. On the contrary, the variable information refers to modifiable information among the information which forms the additional wallet component. In other words, the variable information indicates information which is modifiable and thus is not common among a plurality of additional wallet components. For example, the common information can be a display layout of the additional wallet component, and the variable information can be detailed information of the additional wallet component. In other words, the display layout of the additional wallet component corresponding to the common information can be the common information fixed among a plurality of wallet add-on components. On the contrary, the detailed information of the additional wallet component corresponding to the variable information can be modifiable information among the information which forms the additional wallet component.

FIG. 6 is a view illustrating a wallet component and an additional wallet component. Referring to FIG. 6, an example in which the additional wallet element 600 is a coupon. In other words, the additional wallet component in FIG. 6 corresponds to the coffee coupon. The additional wallet component corresponding to the coffee coupon in FIG. 6 can include the provider's image logo, the provider's company name, and the detailed information 602 of the coupon. For example, as shown in FIG. 6, the provider's image logo such as a coffee cup, the provider's company name such as the 'S Coffee', the detailed information 602 of a discount amount of $0.40 can be included in the additional wallet component.

Here, the additional wallet component illustrated in FIG. 6 can include the common information and the variable information received from the second provider server 400. Also, the common information can be the display layout of the additional wallet component and the variable information can be the detailed information of the additional wallet component. Therefore, the display layout which displays the provider's image logo and the provider's company name 600 on an upper left corner of the screen, and the detailed information of the coupon 602 displayed on a lower comer(or lower right corner) of the screen can be the common information. Therefore, the display layout of the additional wallet component corresponding to the common information can be the information which cannot be changed because it is fixed between a plurality of additional wallet components.

On the contrary, the variable information can be the detailed information of the discount amount of $0.40 corresponding to the detailed information 602 of the additional wallet component. Here, the detailed information of the additional wallet component corresponding to the variable information can be the modifiable information among the information which forms the additional wallet component.

Therefore, the second user of the second provider sever 400 does not change the display layout of the additional wallet component corresponding to the common information and can only change the detailed information of the additional wallet component. In other words, the second user of the second provider server 400 may not change the display layout of the additional wallet component corresponding to the common information for a plurality of additional wallet components and can change the detailed information of the additional wallet component corresponding to the variable information to be registered to the ticket server 200.

Therefore, an embodiment of the present disclosure is advantageous in that various additional wallet components are registered to the ticket server 200 in a simple manner by modifying only the detailed information of the primary wallet component, corresponding to the variable information, to be registered to the ticket server 200.

Further, the additional wallet component can be partnership information of the primary wallet component. In other words, the first provider (first user) has a partner relationship with the second provider (second user) of the additional wallet component. For example, as shown in FIG. 6, the primary wallet component can be the airplane ticket, the first provider (first user) can be the 'K Airline', the additional wallet component can be the coffee coupon, and the second provider (second user) can be the 'S Coffee'. Here, the first provider (first user), that is, the 'K Airline' has a partner relationship with the second provider (second user), that is, the 'S Coffee'. Therefore, the coffee coupon from the 'S Coffee' which is located in the airport can be used when the 'K Airline' airplane ticket, that is, the primary wallet component is used in the airport. Therefore, an advertising effect of the 'S Coffee' can be increased by showing the 'K Airline' airplane ticket and the 'S Coffee' coffee coupon at the same time to the user of terminal apparatus 100.

Therefore, an embodiment of the present disclosure is advantageous in that the primary wallet component along with the additional wallet component are provided to the user of the terminal apparatus, thereby increasing the advertising effect of the provider of the additional wallet component.

Next, the terminal apparatus receives the primary wallet component and the additional wallet component (S120). The terminal apparatus 100 can receive the primary wallet component and the additional wallet component from the ticket server 200.

Next, the primary wallet component and the additional wallet component are saved (S125). The controller 110 of the terminal apparatus 100 can save the received primary wallet component and the additional wallet component in the storage unit 175.

Next, the primary wallet component and the additional wallet component are displayed on the touch screen (S130). The controller 110 of the terminal apparatus 100 can display the primary wallet component and the additional wallet component on the touch screen 190. For example, as shown in FIG. 6, the controller 110 can display the primary wallet component such as the airplane ticket and the additional wallet component 600 such as the coffee coupon on the touch screen 190.

Here, as shown in FIG. 6, the controller 110 can display the primary wallet component 500 on an upper portion of the touch screen and can display the additional wallet component 600 on a bottom portion of the touch screen.

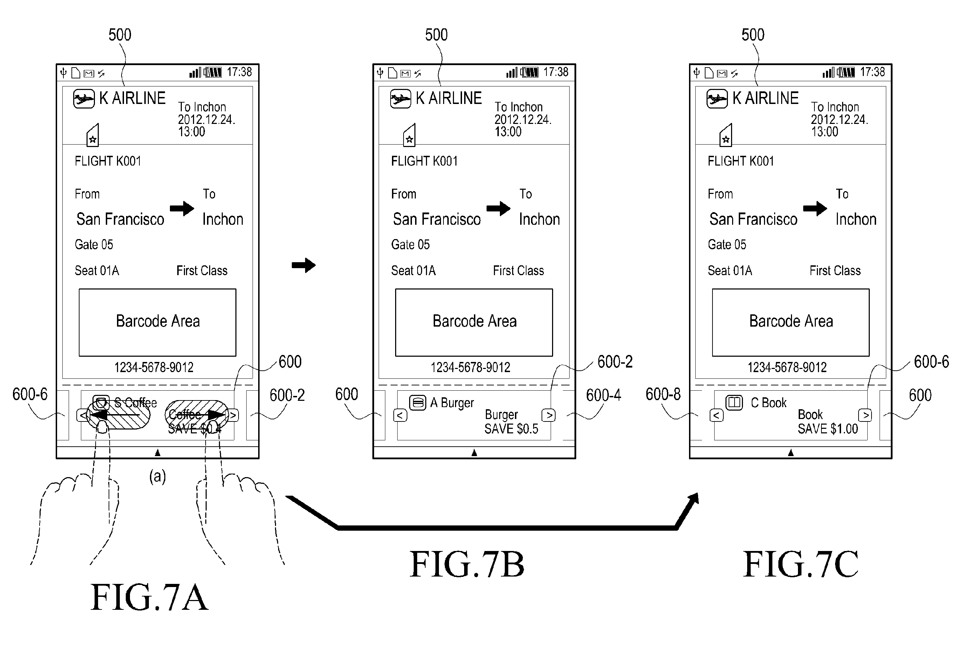

Also, there can be a plurality of additional wallet components and the plurality of additional wallet components can be arrayed in a row and displayed on the bottom portion of the touch screen, and a plurality of additional wallet components can be scrolled through by a drag and/or a flick on the additional wallet component displayed among a plurality of additional wallet components. FIG. 7 is a view illustrating an additional wallet component displayed on a touch screen being scrolled. Referring to FIG. 7a, there can be a plurality of additional wallet components and the plurality of the additional wallet components 600, 600-2, 600-6 can be arrayed in a row and displayed on the bottom of the touch screen. Also, a plurality of additional wallet components can be scrolled through by a drag or the flick on the additional wallet component displayed among a plurality of the additional wallet components. For example, when a left direction drag or flick on the additional wallet components 600 displayed on the touch screen is detected, the controller 110 can scroll a plurality of additional wallet components to left to display the additional wallet component 600-2 which is located on a right side of the additional wallet component of 600 on the touch screen, as shown in FIG. 7b. In addition, in FIG 7a, when a right direction drag or flick on the additional wallet component 600 displayed on the touch screen is detected, the controller 110 scrolls a plurality of the additional wallet components to right to display the additional wallet components of 600-6 which is located on a left side of the additional wallet component of 600, as shown in FIG. 7c.

Therefore, according to one embodiment of the present disclosure, the primary wallet component can be displayed on a top of the touch screen, and the additional wallet component can be displayed on a bottom of the touch screen.

In addition, one embodiment of the present disclosure is advantageous in that, when a plurality of the additional wallet components are arranged and displayed in a row in the bottom of the touch screen, a plurality of additional wallet components can be scrolled by the drag or flick on the additional wallet component displayed among a plurality of additional wallet components.

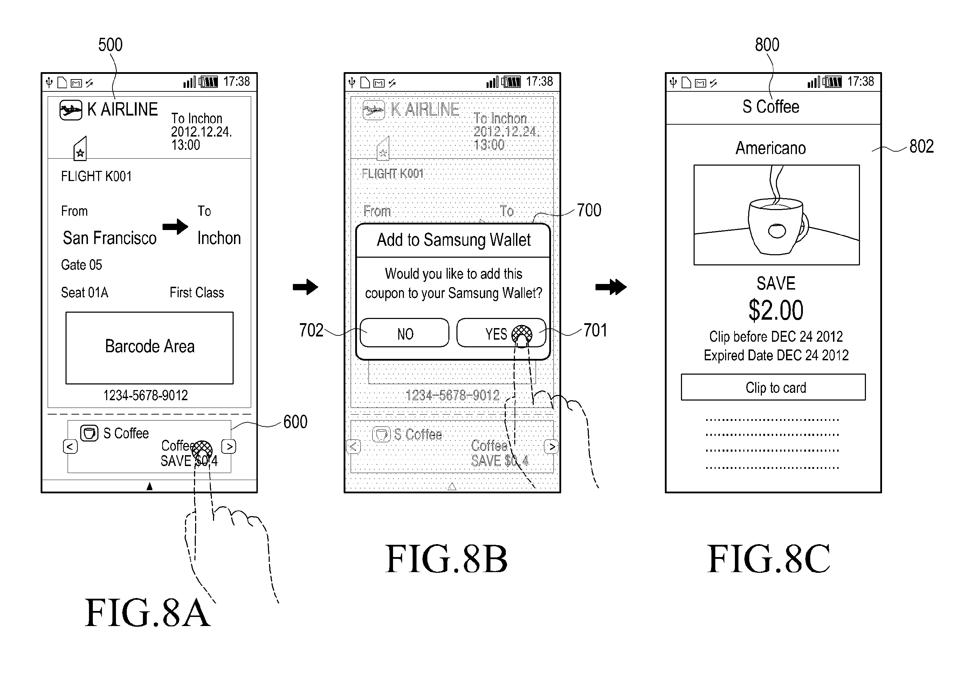

Next, a selection of an additional wallet component is detected (S140). The controller 110 of the terminal apparatus 100 can detect selection of the additional wallet component. Here, the selection of the additional wallet component can be a touch on the additional wallet component displayed on the touch screen 190. Therefore, when a touch on the additional wallet component display on the touch screen 190 is recognized, the controller 110 can detect that the additional wallet component is selected. FIG. 8 is a view illustrating issuance of an additional wallet component according to one embodiment of the present disclosure. Referring to FIG 8a, the primary wallet component 500 and the additional wallet component 600 are displayed on the touch screen. Here, when the touch on the additional wallet component 600 displayed on the touch screen 190 is recognized, the controller 110 can detect that the addition component 600 is selected.

Also, when the selection of the additional wallet component 600 is detected as shown in FIG. 8b, the controller 110 can display a notification inquiring whether to request the second provider server to issue the selected additional wallet component on the touch screen. Further, the controller 110 can display icons corresponding to YES 701 and NO 702 inquiring whether to request issuance of the additional wallet component. Also, when the touch corresponding to the icon YES 701 is detected, step S150 is performed, and on the other hand, when the touch for NO 702 icon is detected, the process is terminated.

Next, when the selection of the additional wallet component is detected, the second provider server is requested to issue the selected additional wallet component (S150). When the selection of the additional wallet component is detected from step S140 described above, the controller 110 of the terminal apparatus can request the second provider server to issue the selected additional wallet component. Here, the selected additional wallet component can include a preset URL or preset ID. Therefore, the controller 110 of the terminal apparatus can request the issuance of the selected additional wallet component by transmitting the preset URL or preset ID to the second provider server 400. Also, by transmitting the preset URL or the preset ID to the second provider server 400, a method of requesting the issuance of the selected additional wallet component can be implemented by the following computer algorithm.

```
     Starts Algorithms
         {
         "head": {
         "version": 1,
         "serial": "1234abcdefg567890",
         "skinId" : "SKIN0001 ",
         "publisher": "Samsung Coupon Service",
         ... /* omitted */
         Omission
         },
         "view":[
         {"id":"ABSTRACT_MIDDLE_VALUE", "text":{"value":"to Pais"}},
         {"id":"ABSTRACT_BOTTOM_VALUE", "text":{"value":"2013.2.14
         13:00"}},
         .... /* omitted */
         Omission
         ],
         "alerts":[
         {"id":"ALERT1", "date":{"value":"02/14 12:23", "pattern":"MM/DD
         hh:mm"}},
         {"id":"ALERT2", "place"{"value":"Inchoen", "latitude": 37.4503, "longitude":
         126.4501}},
         {"id":"ALERT3","date":{"value":"02/14 18:30", "pattem":"MM/DD
         hh:mm"}},
         {"id":"ALERT1", "place"{"value":"Paris", "latitude": 9.4503, "longitude":
         130.4501}}
         ],
         "partners": [
         {"id":"PARTNER1_BANNER", "text": { "value":"
         https://starbucks.com/banner/123"}},
         {"id":"PARTNER1_TICKET",
         "link":{"value":"https://starbucks.com/ticket/123"}
         {"id":"PARTNER2_BANNER", "text":{ "value":"
         https://coffeebean.com/banner/123"}},
         {"id":"PARTNER2_TICKET", "link":{"value":
         https://coffeebean.com/ticket/123}
         }
         ]
         }
    Ends Algorithms
```

In the above algorithm, the preset URL or the preset ID corresponding to the selected additional wallet component can be included through a "partners" part. In other words, in the "partners" part of the algorithm, the preset URL corresponding to the selected additional wallet component can be assigned. Therefore, the controller 110 of the terminal apparatus can transmits the preset URL or the preset ID to the second provider server 400 and request issuance of the selected additional wallet component.

Next, the second provider server determines whether the issuance of the requested additional wallet component is possible (S155). The controller 410 of the second provider server 400 can verify if the issuance for the requested additional wallet components is possible. For example, if the coupon's expiration date corresponding to the requested additional wallet component is 2012.12.24, and the current date is 2012.12.26, the coupon is not available to use because the coupon has already expired. Therefore, when the expiration of the coupon has passed, the controller 410 of the second provider server 400 can verify if the issuance for the requested additional wallet component is possible. Therefore, when the issuance for the requested additional wallet component is possible, step S 160 is performed, otherwise, the process ends when the issuance for the requested additional wallet component is impossible.

Next, the second provider server issues the requested additional wallet component (S160). If the issuance for the requested additional wallet component is possible in the above described step S155, the second provider server 400 issues the requested additional wallet components.

Next, the terminal apparatus receives the issued additional wallet component (S 170). The second provider server 400 transmits the issued additional wallet component to the terminal apparatus 100, and the terminal apparatus 100 receives the issued additional wallet component.

Next, the issued additional wallet component is displayed on the touch screen (S180). The controller 110 of the terminal apparatus100 displays the issued additional wallet component which is received in step S 170 on the touch screen. For example, as shown in FIG. 8c, the controller 110 of the terminal apparatus 100 displays the issued additional wallet component such as the coffee coupon on the touch screen. Further, the additional wallet component corresponding to the issued additional wallet component can exist, although not shown in FIG. 8c. In other words, the additional wallet component such as a snack coupon of 'B Snack' company in a partner relationship with the 'S Coffee' can exist. Here, the additional wallet component such as the snack coupon from the 'B Snack' company can be displayed on a bottom of the 'S Coffee' company's coupon. Also, the above described step S140 and step S180 can be performed repeatedly when the selection of the additional wallet component such as the snack coupon from the 'B Snack' is detected.

Therefore, one embodiment of the present disclosure is advantageous in that, when the selection of the additional wallet component in a partner relationship with the wallet component is detected, the issuance of the additional wallet component is requested to the second provider server so that the additional wallet component is issued. Further, one embodiment of the present disclosure is advantageous in that the additional wallet component can be sequentially displayed on the touch screen so that the additional wallet component can be sequentially issued.

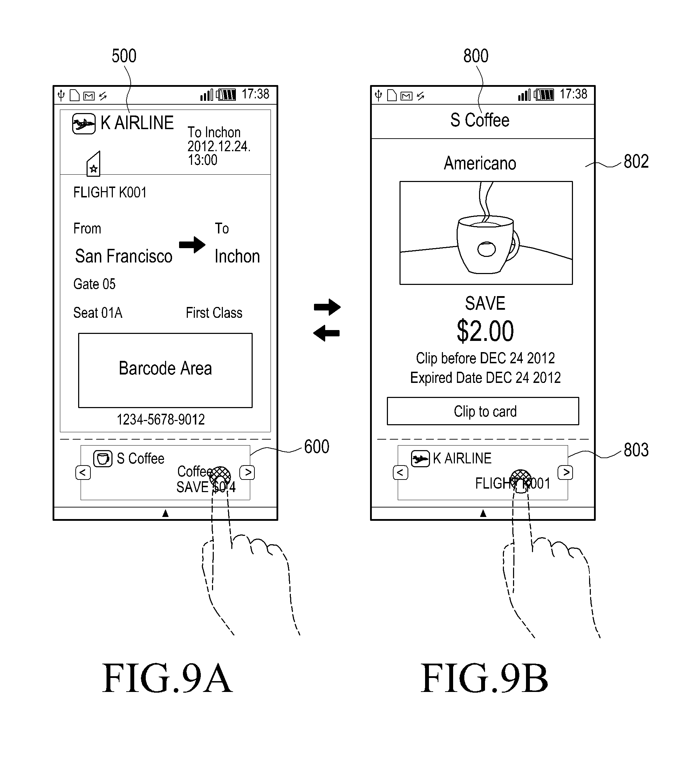

Also, FIG. 9 is a view illustrating a conversion of a screen displaying an issued additional wallet component into a screen displaying a wallet component. As described above, the issued additional wallet component 802 displayed in FIG. 8c can be displayed as in FIG. 9b. In other words, as shown in FIG. 9b, the issued wallet component 803 can be displayed together on the bottom of the issued additional wallet component 802. Here, when the selection or touch of the wallet component 803 is detected, the controller 110 can again display the primary wallet component 500 on the touch screen as shown in FIG. 9a. Therefore, a screen displaying the issued wallet component 802 is converted into a screen displaying the primary wallet component 500.

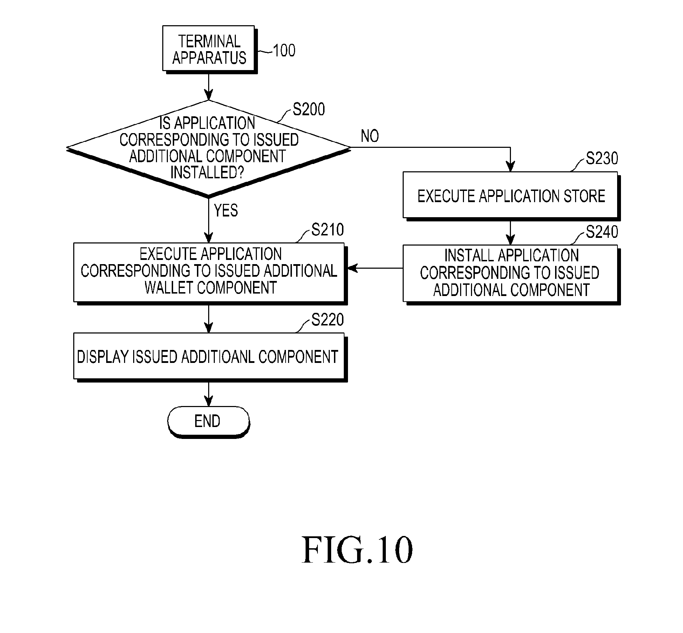

FIG. 10 is a flowchart illustrating a controlling method of a terminal apparatus for transmitting partnership information of the wallet component according to another embodiment of the present disclosure. The flowchart according to another embodiment of the present disclosure illustrated in FIG. 10 is a flowchart illustrating steps subsequent to steps S110 to S170 illustrated in FIG. 5. Therefore, another embodiment of the present disclosure illustrated in FIG. 10 first includes steps S110 to S 170 illustrated in FIG. 5 and steps S200 to S240. Hereinafter, steps S200 to S240 will be described.

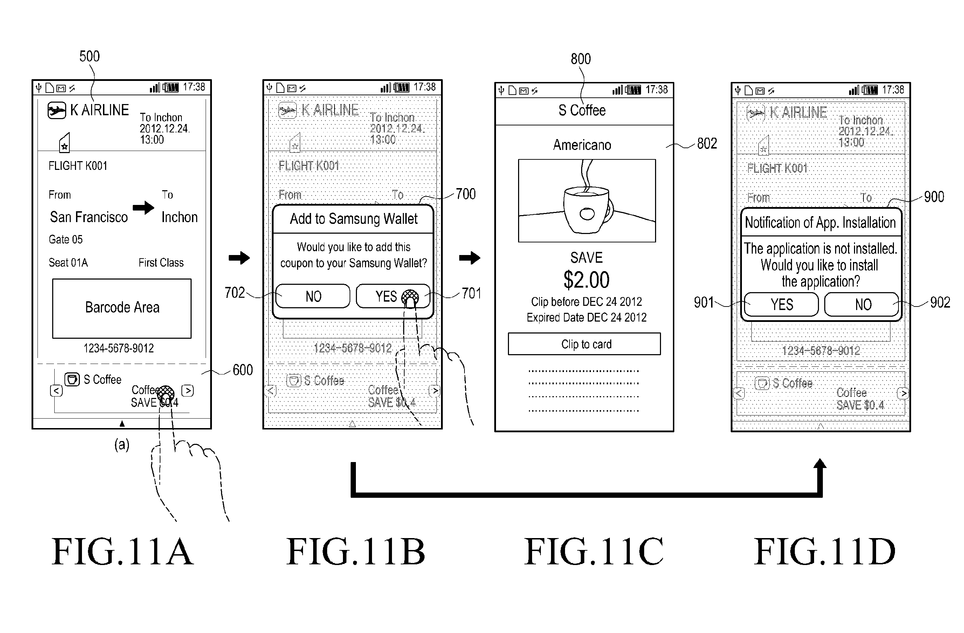

Referring to FIG. 10, next, whether the application corresponding to the issued additional wallet component is installed is determined (S200). The controller 110 of the terminal apparatus 100 verifies whether the application corresponding to the issued additional wallet component received in step S 170 is installed. FIG. 11 is a view illustrating a screen for executing of an application corresponding to an issued additional wallet component according to another embodiment of the present disclosure. For example, referring to FIG. 11a, the issued additional wallet component is the coffee coupon from the 'S Coffee' company. Here, the controller 110 verifies whether the application from the 'S Coffee' company is installed.

Next, when the application corresponding to the issued additional wallet component is installed, the application corresponding to the issued additional wallet component is executed (S210). For example, in FIG. 11a, when an application of the 'S Coffee' company is installed, the application of the 'S Coffee' company can be executed. Here, as shown in FIG. 11b or FIG. 11c, the controller 110 can execute the application of the 'S Coffee' company in steps S 140 to S 170.

Next, the issued additional wallet component is displayed (S220). The controller 110 can display the issued additional wallet component 802 on the touch screen as shown in FIG. 11c.

On the contrary, when the application corresponding to the issued additional wallet component is not installed, an application store is executed (S230). When the application corresponding to the issued additional wallet component is not installed, the controller 110 can execute the application store. For example, when the application from the 'S Coffee' company is not installed as shown in FIG 11a, a notification 900 inquiring whether to install the application of the 'S Coffee' can be displayed as shown in FIG. 11d. Here, the controller 110 can display an icon 901 for YES to agree to installation of the application of the 'S Coffee' company and an icon 902 for NO to disagree with installation of the application. Also, when a touch for YES 901 is detected, the controller 110 executes the application store. On the contrary, a touch for NO 902 is detected, the process is ended. For example, the controller 110 can perform a user authentication if a password is input. As shown in Fig. 11d, the controller 110 can execute the application store and the controller 110 can confirm whether the user want to install the application. Also, the controller 110 can receive from the user whether to install the application.

Next, the application corresponding to the issued additional wallet component is installed (S240). The controller 110 installs the application corresponding to the issued additional wallet component. For example, as in FIG. 11, when the application corresponding to the issued additional wallet component is the application of the 'S Coffee' company, the controller 110 installs the application of the 'S Coffee' company.

However, differently from the above-mentioned steps S230 and S240, when the application corresponding to the issued additional wallet component is not installed, the wallet application can be executed to display the issued additional wallet component. The wallet application indicates an application which collects the wallet component to be displayed. Therefore, when the application corresponding to the issued additional wallet component is not installed, the controller 110 can directly execute the wallet application to display the issued additional wallet component.

Therefore, another embodiment of the present disclosure is advantageous in that, when the application corresponding to the issued additional wallet component is not installed, installation of the application is induced to use the additional wallet component and/or the primary wallet application is executed to use the additional wallet component.

It should be noted that embodiments of the present disclosure can be implemented by hardware, software, or a combination of the hardware and the software. The software can be stored, for example, regardless of whether a delete function or re-record function is provided or not, in a volatile or non-volatile storage device including a storage device such as a read-only memory (ROM) or a memory such as a random access memory (RAM), a memory chip, or an integrated circuit, and a storage medium such as a compact disk (CD), a DVD, a magnetic disk, or a magnetic tape which enables an optical or magnetic recording as well as being readable by a machine (e.g., a computer). Also, it should be understood that the embodiments of the present disclosure can be implemented by a computer or a portable terminal including a controller and a memory, and the memory is an example of a machine readable storage medium suitable for storing a program or programs including instructions that implement the embodiments of the present disclosure. Therefore, the present disclosure includes a machine (e.g., a computer) readable storage medium which stores a program or programs including codes for implementing a method described by the appended claims. Also, such a program can be electrically transmitted through any medium similar to a communication signal which is propagated by wire or wirelessly, and the present disclosure includes equivalents thereof.

Also, the terminal apparatus can receive and store the program from a program providing apparatus via wire or wirelessly connected thereto. The program providing apparatus can include a program including instructions for performing the embodiments of the present disclosure, a memory for storing information needed for the embodiments of the present disclosure, a communication unit for performing a wire or wireless communication with the terminal apparatus, and a controller for transmitting a corresponding program to a transceiver apparatus according to a request from the terminal apparatus or automatically.

One embodiment of the present disclosure is advantageous in that various wallet components can be registered to the ticket server in a simple manner by modifying only the detailed information of the wallet component, corresponding to the variable information, to be registered to the ticket server.

One embodiment of the present disclosure is advantageous in that various additional wallet components are registered to the ticket server in a simple manner by modifying only the detailed information of the wallet component, corresponding to the variable information, to be registered to the ticket server.

One embodiment of the present disclosure is advantageous in that the primary wallet component along with the additional wallet component are provided to the user of the terminal apparatus, thereby increasing an advertising effect of the provider of the additional wallet component.

One embodiment of the present disclosure is advantageous in that, when a plurality of the additional wallet components are arranged and displayed in a row in the bottom of the touch screen, a plurality of additional wallet components can be scrolled by a drag or flick on the additional wallet component displayed among a plurality of additional wallet components.

One embodiment of the present disclosure is advantageous in that, when the selection of the additional wallet component in a partner relationship with the wallet component is detected, the second provider server is requested to issue the additional wallet component so that the additional wallet component is issued. Further, one embodiment of the present disclosure is advantageous in that the additional wallet component can be sequentially displayed on the touch screen so that the additional wallet component can be sequentially issued.

Another embodiment of the present disclosure is advantageous in that, when the application corresponding to the issued additional wallet component is not installed, installation of the application is induced to use the additional wallet component and/or the wallet application is executed to use the additional wallet component.

Although the present disclosure has been described with one embodiment, various changes and modifications may be suggested to one skilled in the art. It is intended that the present disclosure encompass such changes and modifications as fall within the scope of the appended claims.

## Claims

1. A method for performing electronic transactions, the method comprising:
receiving (S120) a primary wallet component registered in a ticket server (200) and an additional wallet component registered to the ticket server (200) in connection with the primary wallet component, from a first provider server (300);
displaying (S130) the primary wallet component and the additional wallet component on a screen (190);
if selection of the additional wallet component is detected (S140), requesting (S150) a second provider server (400) to issue the selected additional wallet component;
receiving (S 170) the additional wallet component issued by the second provider server (400) corresponding to the requested additional wallet component; and
displaying (S180) the issued additional wallet component on the screen (190).

2. The method of claim 1, wherein the primary wallet component and the additional wallet component are at least one of a coupon (602), a ticket (502) comprising a barcode, and a card.

3. The method of claim 1 or 2, wherein the primary wallet component and/or the additional wallet component include common information and variable information.

4. The method of claim 3, wherein the common information is a display layout of the primary and additional wallet component, and the variable information is detailed information of the primary and additional wallet component.

5. The method of any one of the previous claims, wherein the additional wallet component includes partnership information of the primary wallet component.

6. The method of any one of the previous claims, wherein the primary wallet component is displayed on an upper portion of the screen (190), and the additional wallet component is displayed on in on a lower portion of the screen (190).

7. The method of any one of the previous claims, wherein the screen (190) is a touch screen and a plurality of additional wallet components are arrayed in a row and displayed on a bottom portion of the touch screen (190), and can be scrolled through by a drag or a flick.

8. The method of claim 1, wherein requesting (S150) a second provider server (400) to issue the selected additional wallet component comprises displaying a notification inquiring whether to request the second provider server to issue the selected additional wallet component on the screen (190).

9. The method of any one of the claims 1-8, further comprising:
determining (S200) whether an application corresponding to the issued additional wallet component is installed;
if the application corresponding to the issued additional wallet component is installed, executing (S210) the application corresponding to the issued additional wallet component; and
displaying (S220) the issued additional wallet component.

10. The method of any one of the claims 1-8, further comprising:
determining (S200) whether an application corresponding to the issued additional wallet component is installed;
if the application corresponding to the issued additional wallet component is not installed, receiving whether to install; and
installing (S240) the application corresponding to the issued additional wallet component.

11. A terminal apparatus (100) for performing electronic transactions, the terminal apparatus comprising:
a controller (110) configured to
receive (S120) a primary wallet component registered in a ticket server (200) and an additional wallet component registered to the ticket server in association with the primary wallet component from a first provider server (300),
display (S130) the primary wallet component and the additional wallet component on a screen (190),
if selection of the additional wallet component is detected (S 140), request (S150) a second provider server (400) to issue the selected additional wallet component,
receive (S170) the additional wallet component issued by the second provider server corresponding to the requested additional wallet component, and
display (S180) the issued additional wallet component on the screen (190); and
a storage unit (175) configured to store (S125) the wallet component and the additional wallet component.

12. The terminal apparatus (100) of claim 11, wherein the primary wallet component and the additional wallet components include common information and variable information.

13. The terminal apparatus (100) of claim 11 or 12, wherein the additional wallet component is partnership information of the primary wallet component.

14. The terminal apparatus (100) of any one of claims 11-13, wherein the controller (110) is configured to determine (S200) whether an application corresponding to the issued additional wallet component is installed, if the application corresponding to the issued additional wallet component is installed, execute (S210) the application corresponding to the issued additional wallet component, and (S220) display the issued additional wallet component.

15. The terminal apparatus (100) of any one of claims 11-13, wherein the controller determines (S200) whether an application corresponding to the issued additional wallet component is installed, and if the application corresponding to the issued additional wallet component is not installed, execute (S230) an application store, and install (S240) the application corresponding to the issued additional wallet component.
